# EUROPÄISCHE PATENTSCHRIFT

(11) **EP 3 739 180 B1**
(45) Veröffentlichungstag und Bekanntmachung des Hinweises auf die Patenterteilung: **07.06.2023**
(21) Anmeldenummer: 20169039.3
(22) Anmeldetag: 09.04.2020
(51) Int. Cl.: F01P 7/16, F01P 3/12, F01P 3/20, F02M 26/06, F02M 26/28, F02B 29/04

(54) **KÜHLKREISLAUFANORDNUNG EINER VERBRENNUNGSKRAFTMASCHINE**
COOLING CIRCUIT ARRANGEMENT OF A COMBUSTION ENGINE
AGENCEMENT DE CIRCUIT DE REFROIDISSEMENT D'UN MOTEUR À COMBUSTION INTERNE

(30) Priorität: 14.05.2019 DE 102019207000
(43) Veröffentlichungstag der Anmeldung: 18.11.2020
(73) Patentinhaber: VOLKSWAGEN AG, 38440 Wolfsburg (DE)
(72) Erfinder: Lucke, Stefan, 38446 Wolfsburg (DE); Kiel, Marco, 39116 Magdeburg (DE); Holthoff, Oliver, 38446 Wolfsburg (DE); Gebert, Simon, 38440 Wolfsburg (DE)

(56) Entgegenhaltungen:
- EP-A1- 3 023 609
- DE-A1-102006 008 826
- DE-A1-102009 051 377
- DE-A1-102017 123 469

## Beschreibung

Die Erfindung betrifft eine Kühlkreislaufanordnung einer Verbrennungskraftmaschine, insbesondere eines Kraftfahrzeugs.

Eine Verbrennungskraftmaschine umfasst regelmäßig einen oder mehrere Kühlkreisläufe als Kühlkreislaufanordnung, z. B. einen Hochtemperaturkreislauf (hohe Wärmeabgabekapazität) und einen Niedertemperaturkreislauf (geringere Wärmeabgabekapazität). In jedem Kühlkreislauf ist zumindest eine Pumpe angeordnet.

Der Hochtemperaturkreislauf ist zur Kühlung der Verbrennungskraftmaschine vorgesehen. Ein Niedertemperaturkreislauf ist z. B. zur Kühlung eines Ladeluftkühlers vorgesehen und wird im Betrieb der Verbrennungskraftmaschine regelmäßig auf einem niedrigeren Temperaturniveau betrieben als der Hochtemperaturkreislauf.

Es sind verschiedene Strategien bekannt, durch die eine Aufheizung eines Ladeluftkühlers erreicht werden kann. Ladeluftkühler dienen der Abkühlung eines Gases, das über die Einlassseite einer Verbrennungskraftmaschine einer Brennkammer zugeführt wird. Üblicherweise werden Ladeluftkühler stromabwärts eines Verdichters angeordnet und dienen der Abführung von Wärmeenergie, die durch die Verdichtung des Gases im Verdichter eines Turboladers entsteht. Die Abkühlung des Gases bewirkt eine Erhöhung von Leistung und Wirkungsgrad der Verbrennungskraftmaschine, da durch die Verringerung der Temperatur des Gases die im gleichen Volumen enthaltene Gasmasse erhöht werden kann, so dass entsprechend mehr Kraftstoff zusammen mit dem Gas in der Brennkammer umgesetzt werden kann.

Die Aufheizung eines Ladeluftkühlers ist insbesondere bei Rückführung eines Abgases von einer Abgasseite der Verbrennungskraftmaschine zurück zur Einlassseite über eine Niederdruck-Abgasrückführungsleitung vorteilhaft. Das Abgas enthält insbesondere einen größeren Wassergehalt als das Gas. Die Rückführung des Abgases kann z. B. zu einer Verlangsamung einer Verbrennungsrate in der Brennkammer der Verbrennungskraftmaschine führen, wobei die Einleitung von Wasser in die Brennkammer die Wahrscheinlichkeit von Fehlzündungsereignissen erhöhen kann.

Bei Dieselmotoren kann durch eine Erwärmung des Ladeluftkühlers die Temperatur des der Brennkammer zugeführten Gases erhöht werden, so dass die Prozess- und Abgastemperatur gesteigert werden können und eine Kondensation von Wasser verhindert werden kann. Infolge der höheren Temperaturen kann eine für die Abgasnachbehandlung erforderliche Lightoff-Temperatur schneller erreicht bzw. der Wirkungsgrad der Abgasnachbehandlung verbessert werden.

In der DE 10 2009 051 377 A1 wird ein Antrieb für ein Hybridfahrzeug beschrieben. Der Antrieb umfasst einen Verbrennungsmotor und einen Ladeluftkühler mit einem Ladeluft-Kühlkreislauf sowie eine elektrische Antriebseinheit und einen Elektronik-Kühlkreislauf. Es wird vorgeschlagen den Ladeluft-Kühlkreislauf (also einen Niedertemperaturkreislauf) mit dem Elektronik-Kühlkreislauf über einen Wärmetauscher thermisch zu koppeln.

Aus der DE 10 2015 111 407 A1 ist ein Kühlsystem für ein Fahrzeug bekannt, mit einem Hochtemperaturkreislauf und einem Niedertemperaturkreislauf. Diese beiden Kreisläufe sollen über eine Koppelleitung regelbar miteinander verbindbar sein.

Aus der DE 10 2015 216 420 A1 ist eine Kühlanordnung zur Ladeluftkühlung bekannt. Über schaltbare Bypassleitungen soll eine Regelung der Ladeluftkühlung realisiert werden.

Aus der EP 3 023 609 A1 ist ein Kühlsystem für ein Fahrzeug bekannt.

Es besteht ein ständiges Bedürfnis, vorhandene Anordnungen von Verbrennungskraftmaschinen und Kühlkreisläufen hinsichtlich des Wirkungsgrades und/oder Schadstoffemissionen zu verbessern.

Aufgabe der vorliegenden Erfindung ist es, die mit Bezug auf den Stand der Technik angeführten Probleme zumindest teilweise zu lösen. Insbesondere soll eine Kühlkreislaufanordnung einer Verbrennungskraftmaschine zur schnelleren Erwärmung eines Ladeluftkühlers eingesetzt werden.

Zur Lösung dieser Aufgaben trägt eine Kühlkreislaufanordnung mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird eine Kühlkreislaufanordnung einer Verbrennungskraftmaschine vorgeschlagen. Die Kühlkreislaufanordnung umfasst zumindest einen Hochtemperaturkreislauf und einen Niedertemperaturkreislauf, einen im Hochtemperaturkreislauf angeordneten ersten Wärmetauscher und einen im Niedertemperaturkreislauf angeordneten Ladeluftkühler. Der Hochtemperaturkreislauf ist insbesondere ausgelegt und/oder eingerichtet, das durch ihn geförderte Fluid auf eine höhere Temperatur anzuheben, als der Niedertemperaturkreislauf.

Die Verbrennungskraftmaschine (für die die Kühlkreislaufanordnung vorgesehen und entsprechend konstruiert ist) weist eine Einlassseite und eine Abgasseite auf, die über mindestens eine Brennkammer miteinander verbunden sind, wobei die Abgasseite und die Einlassseite zusätzlich über eine Niederdruck-Abgasrückführungsleitung miteinander verbunden sind, über die ein Abgas von der Abgasseite zurück zur Einlassseite förderbar ist.

Der erste Wärmetauscher ist in wärmeleitender Verbindung mit der Niederdruck-Abgasrückführungsleitung angeordnet. Der Ladeluftkühler ist zur Temperierung eines über die Einlassseite der mindestens einen Brennkammer zuführbaren Gases vorgesehen.

Ein zweiter Wärmetauscher ist sowohl im Hochtemperaturkreislauf als auch im Niedertemperaturkreislauf angeordnet, so dass zwischen dem Hochtemperaturkreislauf und dem Niedertemperaturkreislauf Wärmeenergie über den zweiten Wärmetauscher übertragbar ist.

Der zweite Wärmetauscher ist insbesondere als Gleichstrom-, Kreuzstrom-, Gegenstrom- oder Kreuzgegenstromwärmetauscher ausgeführt.

Bei einem Gleichstromwärmetauscher werden die Kühlfluide nebeneinander in gleicher Richtung geführt. Bei einem Gegenstromwärmetauscher werden die Kühlfluide so geführt, dass sie entgegenkommend aneinander vorbeiströmen. Bei einem Kreuzstromwärmetauscher werden die Kühlfluide so geführt, dass sich ihre Richtungen kreuzen. Bei einem Kreuzgegenstromwärmetauscher werden die Kühlfluide teilweise quer zueinander und teilweise parallel gegeneinander geführt. Bei einem Kreuzgleichstromwärmetauscher werden die Kühlfluide teilweise quer zueinander und teilweise parallel in gleicher Richtung geführt.

In Kühlkreislaufanordnungen von Verbrennungskraftmaschinen der der der Niederdruck-Abgasrückführungsleitung zugeordnete erste Wärmetauscher und der Ladeluftkühler stets in voneinander getrennten Kühlkreisläufen angeordnet sein. Dabei wäre z. B. der erste Wärmetauscher im Hochtemperaturkreislauf und der Ladeluftkühler im Niedertemperaturkreislauf angeordnet. Beide Kreisläufe würden durch eigene Pumpen betrieben, d. h. es existieren Betriebspunkte, bei denen ein als Kühlmittel bzw. als Wärmeüberträger vorgesehenes Fluid in dem (Niedertemperatur-)Kühlkreislauf ausschließlich durch die erste Pumpe und in dem (Hochtemperatur-) Kreislauf ausschließlich durch die zweite Pumpe gefördert wird bzw. förderbar ist. Eine wärmeleitende Verbindung von erstem Wärmetauscher und Ladeluftkühler wäre dabei nicht vorgesehen. Dieses Konzept wird hier nicht verfolgt.

Hier wird nun vorgeschlagen, die vom Abgas stammende und von der Niederdruck-Abgasrückführungsleitung über den ersten Wärmetauscher in die Kühlkreislaufanordnung eingebrachte Wärmeenergie über die Kühlkreislaufanordnung dem Ladeluftkühler (regelbar) zuzuführen.

Es wird vorgeschlagen, die Wärmeenergie ausgehend vom Abgas in der Niederdruck-Abgasrückführungsleitung über den ersten Wärmetauscher auf den Hochtemperaturkreislauf, vom Hochtemperaturkreislauf über den zweiten Wärmetauscher auf den Niedertemperaturkreislauf und über den Niedertemperaturkreislauf hin zum Ladeluftkühler und über den Ladeluftkühler auf das Gas zu übertragen.

Die Übertragung der Wärmeenergie erfolgt insbesondere ausschließlich über Kühlfluide, die den Hochtemperaturkreislauf und den Niedertemperaturkreislauf durchströmen.

Insbesondere kann die Kühlkreislaufanordnung, wenn z. B. der Hochtemperaturkreislauf und der Niedertemperaturkreislauf über ein gemeinsames Reservoir befüllt und/ oder einen Ausgleichsbehälter gemeinsam nutzen, von einem gemeinsamen Kühlfluid durchströmt werden.

Alternativ können der Hochtemperaturkreislauf und der Niedertemperaturkreislauf aber auch fluidtechnisch getrennt ausgeführt sein, wenn z. B. getrennte Reservoire und separate Ausgleichsbehälter vorgesehen sind. In diesem Fall können auch unterschiedliche oder aber gleiche Kühlfluide eingesetzt werden.

Der Hochtemperaturkreislauf dient insbesondere der Kühlung der Verbrennungskraftmaschine, d. h. das Kühlfluid wird zur Abführung von in der Verbrennungskraftmaschine erzeugter Wärmeenergie eingesetzt.

Der Niedertemperaturkreislauf dient insbesondere nicht der Kühlung der Verbrennungskraftmaschine, d. h., dass das hier eingesetzte Kühlfluid zur Temperierung anderer Komponenten eines Kraftfahrzeugs bzw. der Kühlkreislaufanordnung eingesetzt wird (hier zur Temperierung des Ladel uftkühl ers).

Ein in der Niederdruck-Abgasrückführungsleitung angeordneter erster Wärmetauscher kann in dem Abgas enthaltene Wärmeenergie in einen Hochtemperaturkreislauf der Kühlkreislaufanordnung überführen. Über den Hochtemperaturkreislauf kann diese Wärmeenergie zumindest teilweise oder sogar vollständig (unter Berücksichtigung des üblichen Verlustes von Wärmeenergie) über den zweiten Wärmetauscher Niedertemperaturkreislauf und darüber dem Ladeluftkühler zugeführt werden.

Insbesondere kann so unmittelbar nach dem Kaltstart einer Verbrennungskraftmaschine Wärmeenergie des Abgases dem Ladeluftkühler zugeführt werden.

Insbesondere ist über die von dem ersten Wärmetauscher in die Kühlkreislaufanordnung bzw. in den Hochtemperaturkreislauf eingebrachte Wärmeenergie und über den Ladeluftkühler das der mindestens einen Brennkammer zuführbare Gas regelbar bzw. kontrolliert erwärmbar.

Insbesondere kann das der Brennkammer zugeführte Gas über den Ladeluftkühler erwärmt (Steigerung der Temperatur) werden, so dass eine Kondensation von im Gas enthaltenen Wasser verhindert oder zumindest reduziert werden kann und/oder ggf. bereits kondensiertes Wasser wieder verdampft werden kann. Bei Dieselmotoren kann durch die Erwärmung des Ladeluftkühlers die Temperatur des der Brennkammer zugeführten Gases erhöht werden, so dass die Prozess- und Abgastemperatur gesteigert werden können. Damit kann eine für die Abgasnachbehandlung erforderliche "light-off"-Temperatur schneller erreicht bzw. der Wirkungsgrad der Abgasnachbehandlung verbessert werden.

Die Temperatur des Gases kann über eine Steuerung der an den Ladeluftkühler übertragenen Wärmeenergie geregelt bzw. eingestellt werden.

Insbesondere sind Hochtemperaturkreislauf und der Niedertemperaturkreislauf zumindest im zweiten Wärmetauscher fluidtechnisch voneinander getrennt.

Insbesondere weist der Hochtemperaturkreislauf einen Hochtemperaturkreislaufkühler auf. Über den Hochtemperaturkreislaufkühler kann insbesondere das in dem Hochtemperaturkreislauf zirkulierende Kühlfluid an der Umgebung bzw. Umgebungsluft abgekühlt werden. Insbesondere ist der Hochtemperaturkreislaufkühler in einem unabhängig betreibbaren Teil des Hochtemperaturkreislaufes angeordnet. Insbesondere kann der Hochtemperaturkreislaufkühler so lange nicht beaufschlagt werden, bis das Kühlfluid im Hochtemperaturkreislauf eine Mindesttemperatur erreicht hat. Damit kann mehr Wärmeenergie über den zweiten Wärmetauscher auf den Niedertemperaturkreislauf übertragen werden.

Der Niedertemperaturkreislauf weist einen Niedertemperaturkreislaufkühler auf, wobei der Niedertemperaturkreislaufkühler über eine Bypassleitung umgehbar ist. Über den Niedertemperaturkreislaufkühler kann insbesondere das in dem Niedertemperaturkreislauf zirkulierende Kühlfluid an der Umgebung bzw. Umgebungsluft abgekühlt werden. Über die Bypassleitung kann diese Abkühlung zumindest zeitweise unterbunden werden, wobei die von dem zweiten Wärmetauscher auf den Niedertemperaturkreislauf übertragene Wärmeenergie dann über den Ladeluftkühler in höherem Maße dem Gas zugeführt und nicht über den Niedertemperaturkreislaufkühler an die Umgebung abgeführt wird.

Die Bypassleitung führt über den zweiten Wärmetauscher oder zusätzlich ist der zweite Wärmetauscher über die Bypassleitung umgehbar. Wenn also eine separate Bypassleitung vorgesehen ist, über die einerseits der Niedertemperaturkreislaufkühler und andererseits auch der zweite Wärmetauscher umgangen werden kann, ist eine noch genauere Regelung der Temperatur im Niedertemperaturkreislauf und insbesondere am Ladeluftkühler möglich.

Insbesondere sind Regeleinrichtungen (z. B. ansteuerbare Ventile) vorgesehen, über die ein Volumenstrom im Niedertemperaturkreislauf über den zweiten Wärmetauscher, den Niedertemperaturkreislaufkühler und/oder über die gesonderte Bypassleitung (also die, die nicht über den zweiten Wärmetauscher führt) regelbar ist.

Insbesondere ist im Hochtemperaturkreislauf eine erste Pumpe zur Förderung eines Kühlfluids durch den Hochtemperaturkreislauf und im Niedertemperaturkreislauf eine zweite Pumpe zur Förderung eines Kühlfluids durch den Niedertemperaturkreislauf angeordnet, wobei zumindest die erste Pumpe oder die zweite Pumpe hinsichtlich eines Volumenstroms regelbar ist.

Insbesondere sind beide Pumpen voneinander unabhängig regelbar.

Insbesondere ist ein erster Volumenstrom im Hochtemperaturkreislauf über die erste Pumpe unabhängig von einem über die zweite Pumpe geregelten zweiten Volumenstrom im Niedertemperaturkreislauf regelbar und umgekehrt.

Eine besonders vorteilhafte Ausgestaltung umfasst, dass neben dem zweiten Wärmetauscher auch zusätzlich der zweite Wärmetauscher über die separate Bypassleitung umgehbar ist. Insbesondere ist dabei mindestens ein Ventil vorgesehen, durch das ein Volumenstrom im Niedertemperaturkreislauf über den zweiten Wärmetauscher, den Niedertemperaturkreislaufkühler und über die gesonderte Bypassleitung (also die, die nicht über den zweiten Wärmetauscher führt) regelbar ist.

Es wird weiter ein Kraftfahrzeug mit einer Verbrennungskraftmaschine vorgeschlagen, wobei die Verbrennungskraftmaschine eine Einlassseite und eine Abgasseite aufweist, die über mindestens eine Brennkammer miteinander verbunden sind, wobei die Abgasseite und die Einlassseite zusätzlich über eine Niederdruck-Abgasrückführungsleitung miteinander verbunden sind, über die ein Abgas von der Abgasseite zurück zur Einlassseite förderbar ist. Das Kraftfahrzeug weist die beschriebene Kühlkreislaufanordnung auf.

Das Kraftfahrzeug weist einen Turbolader mit einer Abgasturbine und einem Verdichter auf. Die Abgasturbine wird von dem Abgas beaufschlagt und angetrieben. Der Verdichter verdichtet das zur Brennkammer über die Einlassseite zugeführte Gas, ggf. inklusive des über die Niederdruck-Abgasrückführungsleitung zurückgeführten Abgases.

Die Ausführungen zu der Kühlkreislaufanordnung gelten insbesondere gleichermaßen für das Kraftfahrzeug und umgekehrt.

Es wird weiter ein Verfahren zum Betrieb eines Kraftfahrzeuges, insbesondere des beschriebenen Kraftfahrzeuges, vorgeschlagen, wobei das Kraftfahrzeug zumindest eine Verbrennungskraftmaschine mit einer Einlassseite und einer Abgasseite aufweist, die über mindestens eine Brennkammer miteinander verbunden sind, wobei die Abgasseite und die Einlassseite zusätzlich über eine Niederdruck-Abgasrückführungsleitung miteinander verbunden sind, über die ein Abgas von der Abgasseite zurück zur Einlassseite förderbar ist. Das Kraftfahrzeug weist die beschriebene Kühlkreislaufanordnung auf. Das Verfahren weist zumindest die folgenden Schritte auf:
a) Betrieb der Verbrennungskraftmaschine und Beaufschlagen der Niederdruck-Abgasrückführungsleitung mit einem Abgas;
b) Ableiten von Wärmeenergie aus der Niederdruck-Abgasrückführungsleitung über den ersten Wärmetauscher in den Hochtemperaturkreislauf;
c) Übertragen zumindest eines Teils der Wärmeenergie aus dem Hochtemperaturkreislauf über den zweiten Wärmetauscher auf den Niedertemperaturkreislauf;
d) Übertragen zumindest eines Teils der Wärmeenergie aus dem Niedertemperaturkreislauf auf den Ladeluftkühler.

Im Rahmen des Schrittes d) erfolgt insbesondere eine Temperierung des durch den Ladeluftkühler zu temperierenden Gases.

Das Verfahren wird zum Aufheizen des Ladeluftkühlers und damit zur Erwärmung des über die Einlassseite der mindestens einen Brennkammer zuführbaren Gases durchgeführt.

Der Niedertemperaturkreislauf weist einen Niedertemperaturkreislaufkühler auf, der über eine Bypassleitung umgehbar ist; wobei die Bypassleitung beaufschlagt wird, bis der Ladeluftkühler mindestens eine Grenztemperatur erreicht hat oder solange, wie Wärmeenergie hin zum Ladeluftkühler übertragen werden soll.

Insbesondere weist der Hochtemperaturkreislauf einen Hochtemperaturkreislaufkühler auf. Insbesondere wird der Hochtemperaturkreislaufkühler so lange nicht über den Hochtemperaturkreislauf und das darin zirkulierende Kühlfluid beaufschlagt, bis das Kühlfluid im Hochtemperaturkreislauf eine Mindesttemperatur (oder der Ladeluftkühler eine Grenztemperatur) erreicht hat.

Sobald z. B. die Grenztemperatur erreicht ist bzw. Wärmeenergie nicht mehr in dem bisherigen Maße übertragen werden soll, kann die Kühlkreislaufanordnung den Niedertemperaturkreislaufkühler und/oder den Hochtemperaturkreislaufkühler einbeziehen, so dass das in der Kühlkreislaufanordnung zirkulierende Kühlfluid zumindest über einen der Kreislaufkühler abgekühlt werden kann.

Die Ausführungen zu dem Verfahren gelten gleichermaßen für die Kühlkreislaufanordnung und das Kraftfahrzeug und umgekehrt.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: ein Kraftfahrzeug;
- Fig. 2:: ein Kraftfahrzeug mit einer ersten Ausführungsvariante einer Kühlkreislaufanordnung;
- Fig. 3:: ein Kraftfahrzeug mit einer zweiten Ausführungsvariante einer Kühlkreislaufanordnung; und
- Fig. 4:: ein Kraftfahrzeug mit einer dritten Ausführungsvariante einer Kühlkreislaufanordnung.

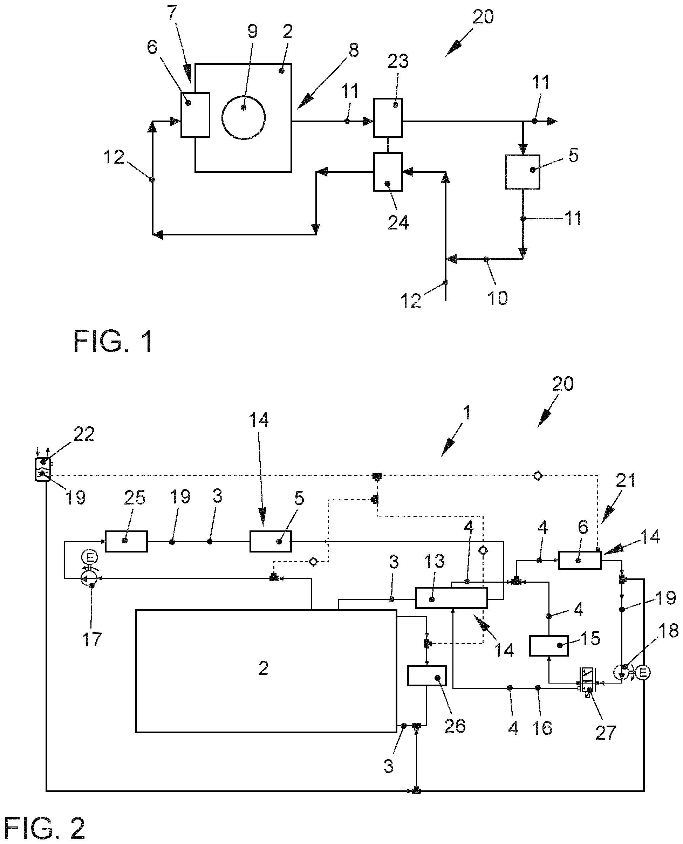

Die Fig. 1 zeigt ein Kraftfahrzeug 20 mit einer Verbrennungskraftmaschine 2. Die Verbrennungskraftmaschine 2 weist eine Einlassseite 7 und eine Abgasseite 8 auf, die über eine Brennkammer 9 miteinander verbunden sind, wobei die Abgasseite 8 und die Einlassseite 7 zusätzlich über eine Niederdruck-Abgasrückführungsleitung 10 miteinander verbunden sind, über die ein Abgas 11 von der Abgasseite 8 zurück zur Einlassseite 7 förderbar ist. Die Niederdruck-Abgasrückführungsleitung 10 ist in wärmeleitender Verbindung mit einem ersten Wärmetauscher 5 einer Kühlkreislaufanordnung 1 (nicht dargestellt) angeordnet zur Ableitung von Wärmeenergie 14 aus einem über die Niederdruck-Abgasrückführungsleitung 10 geführten Abgas 11. Ein Ladeluftkühler 6 ist zur Temperierung eines über die Einlassseite 7 der mindestens einen Brennkammer 9 zuführbaren Gases 12 vorgesehen. Die über den ersten Wärmetauscher 6 in die Kühlkreislaufanordnung 1 eingebrachte Wärmeenergie 14 ist über die Kühlkreislaufanordnung 1 dem Ladeluftkühler 6 zuführbar. Ein Turbolader 23 (bzw. eine Abgasturbine) ist über das Abgas 11 antreibbar. Ein Verdichter 24 des Turboladers 23 verdichtet das Gas 11, das der Brennkammer 9 der Verbrennungskraftmaschine 2 über die Einlassseite 6 zugeführt wird.

Fig. 2 zeigt ein Kraftfahrzeug 20 mit einer ersten Ausführungsvariante einer Kühlkreislaufanordnung 1. Auf die Ausführungen zu Fig. 1 wird verwiesen.

Die Kühlkreislaufanordnung 1 umfasst zumindest einen Hochtemperaturkreislauf 3 und einen Niedertemperaturkreislauf 4, einen im Hochtemperaturkreislauf 3 angeordneten ersten Wärmetauscher 5 und einen im Niedertemperaturkreislauf 4 angeordneten Ladeluftkühler 6. Im Hochtemperaturkreislauf 3 ist zudem eine Komponente 25 angeordnet (z. B. ein weiterer Wärmetauscher, z. B. zum Beheizen eines Innenraums des Kraftfahrzeuges 20).

Die Verbrennungskraftmaschine 2 weist eine Einlassseite 7 und eine Abgasseite 8 auf, die über mindestens eine Brennkammer 9 miteinander verbunden sind, wobei die Abgasseite 8 und die Einlassseite 7 zusätzlich über eine Niederdruck-Abgasrückführungsleitung 10 miteinander verbunden sind, über die ein Abgas 11 von der Abgasseite 8 zurück zur Einlassseite 7 bedarfsweise förderbar ist.

Der erste Wärmetauscher 5 ist in wärmeleitender Verbindung mit der Niederdruck-Abgasrückführungsleitung 11 angeordnet. Der Ladeluftkühler 6 ist zur Temperierung eines über die Einlassseite 7 der mindestens einen Brennkammer 9 zuführbaren Gases 12 vorgesehen.

Ein zweiter Wärmetauscher 13 ist sowohl im Hochtemperaturkreislauf 3 als auch im Niedertemperaturkreislauf 4 angeordnet, so dass zwischen dem Hochtemperaturkreislauf 3 und dem Niedertemperaturkreislauf 4 Wärmeenergie 14 über den zweiten Wärmetauscher 13 übertragbar ist.

Die Wärmeenergie 14 wird ausgehend vom Abgas 11 in der Niederdruck-Abgasrückführungsleitung 10 über den ersten Wärmetauscher 5 auf den Hochtemperaturkreislauf 3, vom Hochtemperaturkreislauf 3 über den zweiten Wärmetauscher 13 auf den Niedertemperaturkreislauf 4 und über den Niedertemperaturkreislauf 4 hin zum Ladeluftkühler 6 und über den Ladeluftkühler 6 auf das Gas 12 übertragen.

Die Kühlkreislaufanordnung 1 nutzt für den Hochtemperaturkreislauf 3 und den Niedertemperaturkreislauf 4 einen Ausgleichsbehälter 22 gemeinsam und wird daher von einem gemeinsamen Kühlfluid 19 durchströmt.

Der Hochtemperaturkreislauf 3 dient der Kühlung der Verbrennungskraftmaschine 2, d. h. das Kühlfluid 19 wird zur Abführung von in der Verbrennungskraftmaschine 2 erzeugter Wärmeenergie 14 eingesetzt.

Hochtemperaturkreislauf 3 und Niedertemperaturkreislauf 4 sind im zweiten Wärmetauscher 13 fluidtechnisch voneinander getrennt und hier nur über den gemeinsamen Ausgleichsbehälter 22 fluidtechnisch miteinander verbunden.

Der Hochtemperaturkreislauf 3 weist einen Hochtemperaturkreislaufkühler 26 auf. Über den Hochtemperaturkreislaufkühler 26 kann das in dem Hochtemperaturkreislauf 3 zirkulierende Kühlfluid 19 an der Umgebung bzw. Umgebungsluft abgekühlt werden. Der Hochtemperaturkreislaufkühler 26 ist in einem unabhängig betreibbaren Teil des Hochtemperaturkreislaufes 3 angeordnet. Damit kann der Hochtemperaturkreislaufkühler 26 so lange nicht beaufschlagt werden, bis das Kühlfluid 19 im Hochtemperaturkreislauf 3 eine Mindesttemperatur erreicht hat. Damit kann mehr Wärmeenergie 14 über den zweiten Wärmetauscher 13 auf den Niedertemperaturkreislauf 4 übertragen werden.

Der Niedertemperaturkreislauf 4 weist einen Niedertemperaturkreislaufkühler 15 auf, wobei der Niedertemperaturkreislaufkühler 15 über eine Bypassleitung 16 umgehbar ist, wobei die Bypassleitung 16 beaufschlagt wird, bis der Ladeluftkühler 6 mindestens eine Grenztemperatur 21 erreicht hat oder solange, wie Wärmeenergie 14 hin zum Ladeluftkühler 6 übertragen werden soll. Über den Niedertemperaturkreislaufkühler 15 kann das in dem Niedertemperaturkreislauf 4 zirkulierende Kühlfluid 19 an der Umgebung bzw. Umgebungsluft abgekühlt werden. Über die Bypassleitung 16 kann diese Abkühlung zumindest zeitweise unterbunden werden, wobei die von dem zweiten Wärmetauscher 13 auf den Niedertemperaturkreislauf 4 übertragene Wärmeenergie 14 dann über den Ladeluftkühler 6 in höherem Maße dem Gas 12 zugeführt und nicht über den Niedertemperaturkreislaufkühler 15 an die Umgebung abgeführt wird.

Die Bypassleitung 16 führt über den zweiten Wärmetauscher 13. Über ein erstes Ventil 27 ist ein Volumenstrom im Niedertemperaturkreislauf 4 über den zweiten Wärmetauscher 13 und den Niedertemperaturkreislaufkühler 15 regelbar.

Im Hochtemperaturkreislauf 3 ist eine erste Pumpe 17 zur Förderung eines Kühlfluids 19 durch den Hochtemperaturkreislauf 3 und im Niedertemperaturkreislauf 4 eine zweite Pumpe 18 zur Förderung eines Kühlfluids 19 durch den Niedertemperaturkreislauf 4 angeordnet.

In einem Schritt a) des Verfahrens erfolgt ein Betrieb der Verbrennungskraftmaschine 2 und ein Beaufschlagen der Niederdruck-Abgasrückführungsleitung 10 mit einem Abgas 11. In einem Schritt b) erfolgt ein Ableiten von Wärmeenergie 14 aus der Niederdruck-Abgasrückführungsleitung 10 über den ersten Wärmetauscher 5 in den Hochtemperaturkreislauf 3. In Schritt c) erfolgt ein Übertragen zumindest eines Teils der Wärmeenergie 14 aus dem Hochtemperaturkreislauf 3 über den zweiten Wärmetauscher 13 auf den Niedertemperaturkreislauf 4. In Schritt d) erfolgt ein Übertragen zumindest eines Teils der Wärmeenergie 14 aus dem Niedertemperaturkreislauf 4 auf den Ladeluftkühler 6. Im Rahmen des Schrittes d) erfolgt eine Temperierung des durch den Ladeluftkühler 6 zu temperierenden Gases 12.

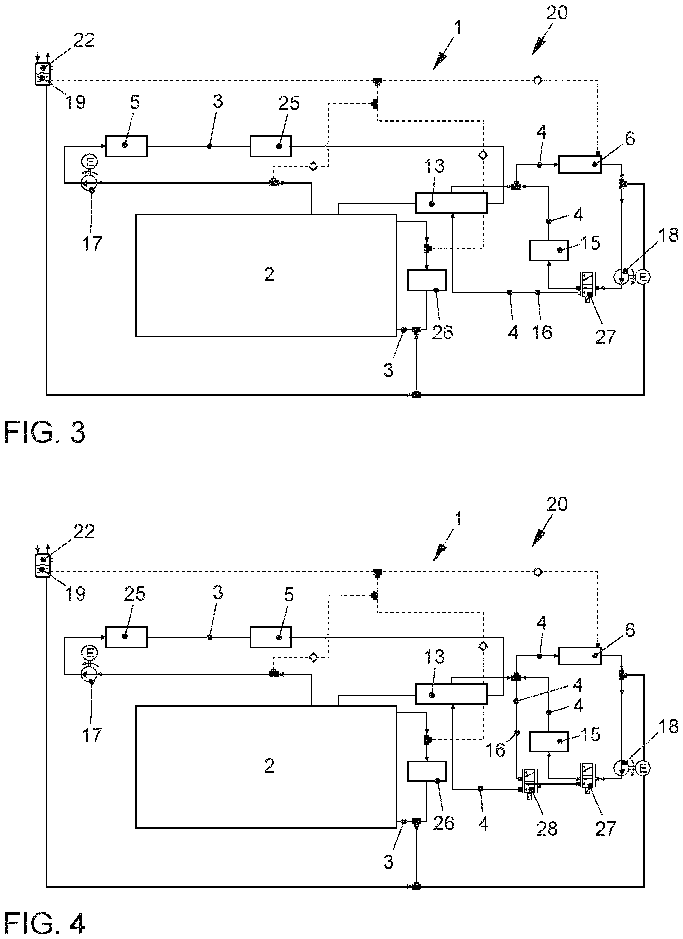

Fig. 3 zeigt ein Kraftfahrzeug 20 mit einer zweiten Ausführungsvariante einer Kühlkreislaufanordnung 1. Auf die Ausführungen zu Fig. 2 wird verwiesen.

Im Unterschied zur ersten Ausführungsvariante sind hier die Komponente 25 und der erste Wärmetauscher 5 miteinander vertauscht angeordnet.

Fig. 4 zeigt ein Kraftfahrzeug 20 mit einer dritten Ausführungsvariante einer Kühlkreislaufanordnung 1. Auf die Ausführungen zu Fig. 2 wird verwiesen.

Im Unterschied zur ersten Ausführungsvariante weist die Kühlkreislaufanordnung hier im Niedertemperaturkreislauf 4 eine separate Bypassleitung 16 auf, über die neben dem Niedertemperaturkreislaufkühler 15 auch der zweite Wärmetauscher 15 umgangen werden kann. Damit ist eine noch genauere Regelung der Temperatur im Niedertemperaturkreislauf 4 und insbesondere am Ladeluftkühler 6 möglich.

Hier ist zusätzlich zu dem ersten Ventil 27 ein zweites Ventil 28 vorgesehen. Beide Ventile 27, 28 sind 3/2-Wege-Ventile, weisen also drei Anschlüsse (erstes Ventil 27: Anschlussleitung von der zweiten Pumpe 18, Leitung hin zum Niedertemperaturkreislaufkühler 15, Leitung hin zum zweiten Ventil; zweites Ventil 28: Anschlussleitung vom ersten Ventil 27, separate Bypassleitung 16 direkt hin zum Ladeluftkühler 6, Leitung hin zum zweiten Wärmetauscher 13) und zwei Schaltstellungen (Verbinden der jeweiligen Anschlussleitung mit einer der beiden vom jeweiligen Ventil wegführenden Leitungen) auf.

### Bezugszeichenliste

- 1: Kühlkreislaufanordnung
- 2: Verbrennungsmotor
- 3: Hochtemperaturkreislauf
- 4: Niedertemperaturkreislauf
- 5: erster Wärmetauscher
- 6: Ladeluftkühler
- 7: Einlassseite
- 8: Abgasseite
- 9: Brennkammer
- 10: Niederdruck-Abgasrückführungsleitung
- 11: Abgas
- 12: Gas
- 13: zweiter Wärmetauscher
- 14: Wärmeenergie
- 15: Niedertemperaturkreislaufkühler
- 16: Bypassleitung
- 17: erste Pumpe
- 18: zweite Pumpe
- 19: Kühlfluid
- 20: Kraftfahrzeug
- 21: Grenztemperatur
- 22: Ausgleichbehälter
- 23: Turbolader
- 24: Verdichter
- 25: Komponente
- 26: Hochtemperaturkreislaufkühler
- 27: erstes Ventil
- 28: zweites Ventil

## Patentansprüche

1. Kühlkreislaufanordnung (1) einer Verbrennungskraftmaschine (2), zumindest umfassend einen Hochtemperaturkreislauf (3) und einen Niedertemperaturkreislauf (4), einen im Hochtemperaturkreislauf (3) angeordneten ersten Wärmetauscher (5) und einen im Niedertemperaturkreislauf angeordneten Ladeluftkühler (6); wobei die Verbrennungskraftmaschine (2) eine Einlassseite (7) und eine Abgasseite (8) sowie einen Turbolader (23) mit einer Abgasturbine und einem Verdichter (24) aufweist, wobei die Einlassseite (7) und die Abgasseite (8) über mindestens eine Brennkammer (9) miteinander verbunden sind, wobei die Abgasseite (8) und die Einlassseite (7) zusätzlich über eine Niederdruck-Abgasrückführungsleitung (10) miteinander verbunden sind, über die ein Abgas (11) von der Abgasseite (8) zurück zur Einlassseite (7) förderbar ist, wobei der Verdichter das zur Brennkammer (9) über die Einlassseite (7) zugeführte Gas inklusive des über die Niederdruck-Abgasrückführungsleitung (10) zurückgeführten Abgases (11) verdichtet; wobei der erste Wärmetauscher (5) in wärmeleitender Verbindung mit der Niederdruck-Abgasrückführungsleitung (10) angeordnet ist, wobei der Ladeluftkühler (6) zur Temperierung eines über die Einlassseite (7) der mindestens einen Brennkammer (9) zuführbaren Gases (12) vorgesehen ist; wobei ein zweiter Wärmetauscher (13) sowohl im Hochtemperaturkreislauf (3) als auch im Niedertemperaturkreislauf (4) angeordnet ist, so dass zwischen dem Hochtemperaturkreislauf (3) und dem Niedertemperaturkreislauf (4) Wärmeenergie (14) über den zweiten Wärmetauscher (13) übertragbar ist; wobei über die von dem ersten Wärmetauscher (5) in die Kühlkreislaufanordnung (1) eingebrachte Wärmeenergie (14) und über den Ladeluftkühler (6) das der mindestens einen Brennkammer (9) zuführbare Gas (12) regelbar erwärmbar ist; wobei der Niedertemperaturkreislauf (4) einen Niedertemperaturkreislaufkühler (15) aufweist; **dadurch gekennzeichnet, dass** der Niedertemperaturkreislaufkühler (15) über eine Bypassleitung (16) umgehbar ist, wobei die Bypassleitung (16) über den zweiten Wärmetauscher (13) führt oder zusätzlich der zweite Wärmetauscher (13) über die Bypassleitung (16) umgehbar ist.

2. Kühlkreislaufanordnung (1) nach Patentanspruch 1, wobei der Hochtemperaturkreislauf (3) und der Niedertemperaturkreislauf (4) zumindest im zweiten Wärmetauscher (13) fluidtechnisch getrennt sind.

3. Kühlkreislaufanordnung (1) nach einem der vorhergehenden Patentansprüche, wobei im Hochtemperaturkreislauf (3) eine erste Pumpe (17) zur Förderung eines Kühlfluids (18) durch den Hochtemperaturkreislauf (3) und im Niedertemperaturkreislauf (4) eine zweite Pumpe (19) zur Förderung eines Kühlfluids (18) durch den Niedertemperaturkreislauf (4) angeordnet ist, wobei zumindest die erste Pumpe (17) oder die zweite Pumpe (19) hinsichtlich eines Volumenstroms regelbar ist.

4. Kraftfahrzeug (20) mit einer Verbrennungskraftmaschine (2), wobei die Verbrennungskraftmaschine (2) eine Einlassseite (7) und eine Abgasseite (8) sowie einen Turbolader (23) mit einer Abgasturbine und einem Verdichter (24) aufweist, wobei die Einlassseite (7) und die Abgasseite (8) über mindestens eine Brennkammer (9) miteinander verbunden sind, wobei die Abgasseite (8) und die Einlassseite (7) zusätzlich über eine Niederdruck-Abgasrückführungsleitung (10) miteinander verbunden sind, über die ein Abgas (11) von der Abgasseite (8) zurück zur Einlassseite (7) förderbar ist, wobei der Verdichter das zur Brennkammer (9) über die Einlassseite (7) zugeführte Gas inklusive des über die Niederdruck-Abgasrückführungsleitung (10) zurückgeführten Abgases (11) verdichtet; wobei das Kraftfahrzeug (20) eine Kühlkreislaufanordnung (1) nach einem der vorhergehenden Patentansprüche aufweist.

5. Verfahren zum Betrieb eines Kraftfahrzeuges (20), wobei das Kraftfahrzeug (20) zumindest eine Verbrennungskraftmaschine (2) mit einer Einlassseite (7) und einer Abgasseite (8) sowie einen Turbolader (23) mit einer Abgasturbine und einem Verdichter (24) aufweist, wobei die Einlassseite (7) und die Abgasseite (8) über mindestens eine Brennkammer (9) miteinander verbunden sind, wobei die Abgasseite (8) und die Einlassseite (7) zusätzlich über eine Niederdruck-Abgasrückführungsleitung (10) miteinander verbunden sind, über die ein Abgas (11) von der Abgasseite (8) zurück zur Einlassseite (7) förderbar ist, wobei der Verdichter das zur Brennkammer (9) über die Einlassseite (7) zugeführte Gas inklusive des über die Niederdruck-Abgasrückführungsleitung (10) zurückgeführten Abgases (11) verdichtet, wobei das Kraftfahrzeug (20) eine Kühlkreislaufanordnung (1) nach einem der Patentansprüche 1 bis 3 aufweist; wobei das Verfahren zumindest die folgenden Schritte aufweist:
a) Betrieb der Verbrennungskraftmaschine (2) und Beaufschlagen der Niederdruck-Abgasrückführungsleitung (10) mit einem Abgas (11);
b) Ableiten von Wärmeenergie (14) aus der Niederdruck-Abgasrückführungsleitung (10) über den ersten Wärmetauscher (5) in den Hochtemperaturkreislauf (3);
c) Übertragen zumindest eines Teils der Wärmeenergie (14) aus dem Hochtemperaturkreislauf (3) über den zweiten Wärmetauscher (13) auf den Niedertemperaturkreislauf (4);
d) Übertragen zumindest eines Teils der Wärmeenergie (14) aus dem Niedertemperaturkreislauf (4) auf den Ladeluftkühler (6);
wobei das Verfahren zum Aufheizen des Ladeluftkühlers (6) und damit zur Erwärmung des über die Einlassseite (7) der mindestens einen Brennkammer (9) zuführbaren Gases (12) durchgeführt wird; **dadurch gekennzeichnet, dass** der Niedertemperaturkreislauf (4) einen Niedertemperaturkreislaufkühler (15) aufweist, der über eine Bypassleitung (16) umgehbar ist; wobei die Bypassleitung (16) beaufschlagt wird, bis der Ladeluftkühler (6) mindestens eine Grenztemperatur (21) erreicht hat.

## Claims

1. Cooling circuit arrangement (1) of an internal combustion engine (2), at least comprising a high-temperature circuit (3) and a low-temperature circuit (4), a first heat exchanger (5) which is arranged in the high-temperature circuit (3), and an intercooler (6) which is arranged in the low-temperature circuit, the internal combustion engine (2) having an inlet side (7), an exhaust gas side (8), and a turbocharger (23) with an exhaust gas turbine and a compressor (24), the inlet side (7) and the exhaust gas side (8) being connected to one another via at least one combustion chamber (9), the exhaust gas side (8) and the inlet side (7) being connected to one another and additionally via a low-pressure exhaust gas recirculation line (10), via which an exhaust gas (11) can be conveyed from the exhaust gas side (8) back to the inlet side (7), the compressor compressing the gas which is fed to the combustion chamber (9) via the inlet side (7), including the exhaust gas (11) which is recirculated via the low-pressure exhaust gas recirculation line (10), the first heat exchanger (5) being arranged in a thermally conducting connection to the low-pressure exhaust gas recirculation line (10), the intercooler (6) being provided for temperature control of a gas (12) which can be fed via the inlet side (7) to the at least one combustion chamber (9); a second heat exchanger (13) being arranged both in the high-temperature circuit (3) and in the low-temperature circuit (4), with the result that thermal energy (14) can be transmitted between the high-temperature circuit (3) and the low-temperature circuit (4) via the second heat exchanger (13); it being possible for the gas (12) which can be fed to the at least one combustion chamber (9) to be heated in a manner which can be closed-loop controlled via the intercooler (6) and via the thermal energy (14) which is introduced by the first heat exchanger (5) into the cooling circuit arrangement (1); the low-temperature circuit (4) having a low-temperature circuit cooler (15); **characterized in that** the low-temperature circuit cooler (15) can be bypassed via a bypass line (16), the bypass line (16) leading via the second heat exchanger (13), or it additionally being possible for the second heat exchanger (13) to be bypassed via the bypass line (16).

2. Cooling circuit arrangement (1) according to Patent Claim 1, the high-temperature circuit (3) and the low-temperature circuit (4) being disconnected in terms of fluid at least in the second heat exchanger (13).

3. Cooling circuit arrangement (1) according to either of the preceding patent claims, a first pump (17) for conveying a cooling fluid (18) through the high-temperature circuit (3) being arranged in the high-temperature circuit (3), and a second pump (19) for conveying a cooling fluid (18) through the low-temperature circuit (4) being arranged in the low-temperature circuit (4), it being possible for at least the first pump (17) or the second pump (19) to be closed-loop controlled with regard to a volumetric flow.

4. Motor vehicle (20) with an internal combustion engine (2), the internal combustion engine (2) having an inlet side (7), an exhaust gas side (8) and a turbocharger (23) with an exhaust gas turbine and a compressor (24), the inlet side (7) and the exhaust gas side (8) being connected to one another via at least one combustion chamber (9), the exhaust gas side (8) and the inlet side (7) being connected to one another additionally via a low-pressure exhaust gas recirculation line (10), via which an exhaust gas (11) can be conveyed from the exhaust gas side (8) back to the inlet side (7), the compressor compressing the gas which is fed to the combustion chamber (9) via the inlet side (7), including the exhaust gas (11) which is recirculated via the low-pressure exhaust gas recirculation line (10); the motor vehicle (20) having a cooling circuit arrangement (1) according to one of the preceding patent claims.

5. Method for operating a motor vehicle (20), the motor vehicle (20) having at least an internal combustion engine (2) with an inlet side (7) and an exhaust gas side (8), and a turbocharger (23) with an exhaust gas turbine and a compressor (24), the inlet side (7) and the exhaust gas side (8) being connected to one another via at least one combustion chamber (9), the exhaust gas side (8) and the inlet side (7) being connected to one another additionally via a low-pressure exhaust gas recirculation line (10), via which an exhaust gas (11) can be conveyed from the exhaust gas side (8) back to the inlet side (7), the compressor compressing the gas which is fed to the combustion chamber (9) via the inlet side (7), including the exhaust gas (11) which is recirculated via the low-pressure exhaust gas recirculation line (10), the motor vehicle (20) having a cooling circuit arrangement (1) according to one of Patent Claims 1 to 3; the method having at least the following steps:
a) operating of the internal combustion engine (2) and loading of the low-pressure exhaust gas recirculation line (10) with an exhaust gas (11);
b) diverting of thermal energy (14) from the low-pressure exhaust gas recirculation line (10) via the first heat exchanger (5) into the high-temperature circuit (3);
c) transferring of at least part of the thermal energy (14) from the high-temperature circuit (3) via the second heat exchanger (13) to the low-temperature circuit (4);
d) transferring of at least part of the thermal energy (14) from the low-temperature circuit (4) to the intercooler (6);
the method being carried out to heat the intercooler (6) and therefore to warm the gas (12) which can be fed via the inlet side (7) to the at least one combustion chamber (9); **characterized in that** the low-temperature circuit (4) has a low-temperature circuit cooler (15) which can be bypassed via a bypass line (16); the bypass line (16) being loaded until the intercooler (6) has reached at least a limit temperature (21).

## Revendications

1. Agencement de circuit de refroidissement (1) d'un moteur à combustion interne (2), comprenant au moins un circuit haute température (3) et un circuit basse température (4), un premier échangeur thermique (5) agencé dans le circuit haute température (3) et un refroidisseur d'air de suralimentation (6) agencé dans le circuit basse température ; le moteur à combustion interne (2) présentant un côté admission (7) et un côté échappement (8) ainsi qu'un turbocompresseur (23) doté d'une turbine à gaz d'échappement et d'un compresseur (24), le côté admission (7) et le côté échappement (8) étant reliés l'un à l'autre par le biais d'au moins une chambre de combustion (9), le côté échappement (8) et le côté admission (7) étant en outre reliés l'un à l'autre par le biais d'une conduite de recirculation de gaz d'échappement basse pression (10), par le biais de laquelle un gaz d'échappement (11) peut être refoulé à partir du côté échappement (8) de manière à revenir au côté admission (7), le compresseur comprimant le gaz acheminé à la chambre de combustion (9) via le côté admission (7), y compris le gaz d'échappement (11) recirculé via la conduite de recirculation de gaz d'échappement basse pression (10) ; le premier échangeur thermique (5) étant agencé en liaison thermoconductrice avec la conduite de recirculation de gaz d'échappement basse pression (10), le refroidisseur d'air de suralimentation (6) étant prévu pour la thermorégulation d'un gaz (12) pouvant être acheminé à l'au moins une chambre de combustion (9) via le côté admission (7) ; un deuxième échangeur thermique (13) étant agencé à la fois dans le circuit haute température (3) et dans le circuit basse température (4), de sorte que de l'énergie thermique (14) puisse être transférée entre le circuit haute température (3) et le circuit basse température (4) par le biais du deuxième échangeur thermique (13) ; le gaz (12) pouvant être acheminé à l'au moins une chambre de combustion (9) pouvant être réchauffé de manière réglable par le biais de l'énergie thermique (14) introduite dans l'agencement de circuit de refroidissement (1) par le premier échangeur thermique (5) et par le biais du refroidisseur d'air de suralimentation (6) ; le circuit basse température (4) présentant un refroidisseur de circuit basse température (15) ; **caractérisé en ce que** le refroidisseur de circuit basse température (15) peut être contourné par le biais d'une conduite de dérivation (16), la conduite de dérivation (16) menant au-delà du deuxième échangeur thermique (13) ou en outre le deuxième échangeur thermique (13) peut être contourné par le biais de la conduite de dérivation (16).

2. Agencement de circuit de refroidissement (1) selon la revendication 1, le circuit haute température (3) et le circuit basse température (4) étant séparés fluidiquement au moins dans le deuxième échangeur thermique (13).

3. Agencement de circuit de refroidissement (1) selon l'une des revendications précédentes, une première pompe (17) servant au refoulement d'un fluide de refroidissement (18) à travers le circuit haute température (3) étant agencée dans le circuit haute température (3) et une deuxième pompe (19) servant au refoulement d'un fluide de refroidissement (18) à travers le circuit basse température (4) étant agencée dans le circuit basse température (4), au moins la première pompe (17) ou la deuxième pompe (19) étant réglable en termes de flux volumique.

4. Véhicule automobile (20) doté d'un moteur à combustion interne (2), le moteur à combustion interne (2) présentant un côté admission (7) et un côté échappement (8) ainsi qu'un turbocompresseur (23) doté d'une turbine à gaz d'échappement et d'un compresseur (24), le côté admission (7) et le côté échappement (8) étant reliés l'un à l'autre par le biais d'au moins une chambre de combustion (9), le côté échappement (8) et le côté admission (7) étant en outre reliés l'un à l'autre par le biais d'une conduite de recirculation de gaz d'échappement basse pression (10), par le biais de laquelle un gaz d'échappement (11) peut être refoulé à partir du côté échappement (8) de manière à revenir au côté admission (7), le compresseur comprimant le gaz acheminé à la chambre de combustion (9) via le côté admission (7), y compris le gaz d'échappement (11) recirculé via la conduite de recirculation de gaz d'échappement basse pression (10) ; le véhicule automobile (20) présentant un agencement de circuit de refroidissement (1) selon l'une des revendications précédentes.

5. Procédé de fonctionnement d'un véhicule automobile (20), le véhicule automobile (20) présentant au moins un moteur à combustion interne (2) doté d'un côté admission (7) et d'un côté échappement (8) ainsi qu'un turbocompresseur (23) doté d'une turbine à gaz d'échappement et d'un compresseur (24), le côté admission (7) et le côté échappement (8) étant reliés l'un à l'autre par le biais d'au moins une chambre de combustion (9), le côté échappement (8) et le côté admission (7) étant en outre reliés l'un à l'autre par le biais d'une conduite de recirculation de gaz d'échappement basse pression (10), par le biais de laquelle un gaz d'échappement (11) peut être refoulé à partir du côté échappement (8) de manière à revenir au côté admission (7), le compresseur comprimant le gaz acheminé à la chambre de combustion (9) via le côté admission (7), y compris le gaz d'échappement (11) recirculé via la conduite de recirculation de gaz d'échappement basse pression (10), le véhicule automobile (20) présentant un agencement de circuit de refroidissement (1) selon l'une des revendications 1 à 3 ; le procédé présentant au moins les étapes suivantes :
a) fonctionnement du moteur à combustion interne (2) et alimentation de la conduite de recirculation de gaz d'échappement basse pression (10) en un gaz d'échappement (11) ;
b) dissipation d'énergie thermique (14) à partir de la conduite de recirculation de gaz d'échappement basse pression (10), par le biais du premier échangeur thermique (5), dans le circuit haute température (3) ;
c) transfert d'au moins une partie de l'énergie thermique (14) au circuit basse température (4) à partir du circuit haute température (3) par le biais du deuxième échangeur thermique (13) ;
d) transfert d'au moins une partie de l'énergie thermique (14) au refroidisseur d'air de suralimentation (6) à partir du circuit basse température (4) ;
le procédé étant mis en œuvre pour chauffer le refroidisseur d'air de suralimentation (6) et par conséquent pour réchauffer le gaz (12) pouvant être acheminé à l'au moins une chambre de combustion (9) via le côté admission (7) ; **caractérisé en ce que** le circuit basse température (4) présente un refroidisseur de circuit basse température (15) qui peut être contourné par le biais d'une conduite de dérivation (16) ; la conduite de dérivation (16) étant alimentée jusqu'à ce que le refroidisseur d'air de suralimentation (6) ait atteint au moins une température limite (21).
